# EUROPÄISCHE PATENTSCHRIFT

(11) **EP 2 828 053 B1**
(45) Veröffentlichungstag und Bekanntmachung des Hinweises auf die Patenterteilung: **02.08.2017**
(21) Anmeldenummer: 13717419.9
(22) Anmeldetag: 07.03.2013
(51) Int. Cl.: B29B 17/02, B07C 5/342, G01N 21/64

(54) **VERFAHREN ZUM SORTIEREN EINER MISCHUNG VON MATERIALIEN**
METHOD FOR SORTING A MIXTURE OF MATERIALS
PROCÉDÉ PERMETTANT DE TRIER UN MÉLANGE DE MATIÈRES

(30) Priorität: 21.03.2012 DE 102012005542
(43) Veröffentlichungstag der Anmeldung: 28.01.2015
(73) Patentinhaber: Polysecure GmbH, 79108 Freiburg (DE)
(72) Erfinder: BAQUE, Thomas, 79109 Freiburg (DE); MOESSLEIN, Jochen, 79100 Freiburg (DE)
(74) Vertreter: Scholz, Volker
(86) Internationale Anmeldenummer: PCT/DE2013/000127
(87) Internationale Veröffentlichungsnummer: WO 2013/139320

(56) Entgegenhaltungen:
- EP-A1- 1 801 148
- EP-A2- 0 476 416
- WO-A2-00/44508
- DE-A1- 4 231 477
- DE-A1-102005 020 816
- DE-A1-102006 031 534
- US-A1- 2003 021 998
- N.N.: "hamos EKS & SEA", hamos GmbH , 17. Mai 2009 (2009-05-17), Seiten 1-2, XP002698810, Gefunden im Internet: URL:http://www.allcontrols.co.uk/documents /recycling/Allcontrols%20-%20EKS-Pixel%20% 28PVC%20Wind%29.pdf [gefunden am 2013-06-13]

## Beschreibung

Die vorliegende Erfindung betrifft ein Verfahren zum Sortieren einer Mischung von Materialien. Die Mischung enthält zumindest ein Material, vorzugsweise Kunststoffmaterial, das Fremdstoffe enthält oder eine spezifische Zusammensetzung und Qualität hat, die bei Recyclingprozessen getrennt werden soll.

Weltweit ist eine Reihe von Kunststoffmaterialen bekannt, die neben dem üblicherweise im Wesentlichen organischen Kunststoffmaterial zumeist anorganische, faser- oder teilchenartige oder sonstige Fremdstoffe enthalten oder unterschiedliche Zusammensetzungen haben, die bei Recycling getrennt werden sollen. Ein bekanntes Beispiel sind Kunststofffenster aus Polyvinylchloridmaterial (PVC), die durch Zusatz von Glasfasern verstärkt werden oder unterschiedliche Additive enthalten.

Kunststoffmaterialien, wie PVC, die frei von anorganischen, faser-, teilchenartigen oder sonstigen Fremdstoffen sind, können auf gut bekannte Art und Weise stofflich wiederverwertet werden. Auf dem Fachgebiet sind etablierte Verfahren zur stofflichen Wiederverwertung von gebrauchten PVC-Kunststofffenstern, PVC-Kunststoffprofilen und entsprechenden Produktionsabfällen bekannt.

Sind in dem Kunststoffmaterial jedoch Fremdstoffe enthalten, können diese einerseits das Aufbereitungs- und Wiederverwertungsverfahren derart stören, dass ein Recycling nicht mehr möglich ist. Dies liegt im Wesentlichen daran, dass ein Recyclingschritt die Einführung des Kunststoffmaterials in einen Extruder und in Filtervorrichtungen umfasst. Im Extruder wie auch den Filtervorrichtungen wirken die Fremdstoffe sehr abrasiv, was in einer sehr schnellen Schädigung des Extruders und der Filter resultiert.

Andererseits können wirtschaftliche und produktstrategische Gründe dagegen sprechen, dass alle Formulierungen eines Kunststoffs, beispielsweise PVC für Fensterprofile, einheitlich und gemeinsam für die Wiederverwertung als Recyclinggranulat aufbereitet werden. Im Falle von glasfaserverstärktem PVC hätten alle Fensterprofilhersteller, die das Recyclinggranulat einsetzen, Glasfasern in ihren PVC-Profilen, wobei fraglich ist, ob dies wirtschaftlich gewünscht oder produktstrategisch opportun ist.

Es besteht daher auf dem Fachgebiet eine Notwendigkeit, Fremdstoffe enthaltende Kunststoffmaterialien von solchen Kunststoffmaterialien, die keine Fremdstoffe enthalten, möglichst frühzeitig, zu Beginn eines Wiederverwertungsverfahrens, sowohl zu erkennen als auch auszusortieren.

Es ist daher eine Aufgabe, das gattungsgemäße Material, vorzugsweise Kunststoffmaterial, derart weiterzuentwickeln, dass es die Nachteile aus dem Stand der Technik überwindet, insbesondere zuverlässig möglichst zu Beginn eines Wiederverwertungsverfahrens erkannt und aussortiert werden kann.

Es ist eine Aufgabe der Erfindung, ein Verfahren zum Sortieren einer Mischung von Materialien bereitzustellen. Das Material, vorzugsweise Kunststoffmaterial, enthält zumindest eine fluoreszierende Verbindung. Dabei ist bevorzugt, dass die Fremdstoffe faser- oder teilchenartig sind, und vorzugsweise ausgewählt sind aus der Gruppe bestehend aus Glasfasern, Silica und Mischungen derselben.

Die DE 42 31 477 A1 beschreibt ein Verfahren zum Sortieren einer Mischung von Materialien nach dem Oberbegriff von Anspruch 1.

Die US 2003/0021998 A1 beschreibt ein Verfahren zum Markieren von Materialien mit einer fluoreszierenden Verbindung. Das Dokument erwähnt auch die Verwendung von Anti-Stokes-Farbstoffen. Es wird erfindungsgemäß vorgeschlagen, dass die fluoreszierende Verbindung Anti-Stokes-Kristalle bzw. -Pigmente umfasst.

Eine Ausführungsform zeichnet sich dadurch aus, dass die fluoreszierende Verbindung im wesentlichen homogen im Material eingemischt ist.

Auch ist bevorzugt, dass das Material ausgewählt ist aus der Gruppe bestehend aus Polyvinylchlorid (PVC) und Vinylchlorid-Copolymeren.

Auch ist bevorzugt, dass das Material PVC-Fensterrahmen, PVC-Profile, PVC-Produktionsabfälle und Mischungen derselben umfasst.

Bevorzugt ist ferner, dass die fluoreszierende Verbindung in einer Konzentration von 10-200 ppm bezogen auf das Gesamtgewicht des Materials, vorliegt. Erfindungsgemäss liegen Anti-Stokes-Kristalle vor.

Anti-Stokes-Kristalle sind bekannt. Sie können durch elektromagnetische Strahlung zur Fluoreszenz angeregt werden. Bei sehr spezifischen Anregungsenergien kann aufgrund von Mehrphotonenprozessen eine fluoreszierende Strahlung erzeugt werden, deren Energie über der Anregungsenergie liegt. So kann z. B. mit einer Anregungsstrahlung im IR-Bereich eine sichtbare Strahlung erzeugt werden. Dabei muss die Anregungsstrahlung genau auf die Energieübergänge des Kristalls passen und daher sehr engbandig sein. Liegt die Anregungsstrahlung außerhalb des wirksamen Bereichs, so reagiert der Kristall ohne Fluoreszenz bzw. leuchtet nicht.

Die Aufgabe wird gelöst durch ein Verfahren zum Sortieren einer Mischung von Materialien, das die in Anspruch 1 genannten Schritte umfasst. Dabei ist besonders bevorzugt, dass das Verfahren mehrstufig ausgeführt wird, wobei in jeder Stufe unterschiedliche Anregungsenergien eingesetzt werden, um jeweils unterschiedliche fluoreszierende Verbindungen anzuregen und die die jeweilige fluoreszierende Verbindung enthaltenden Materialien auszusortieren.

Überraschenderweise wurde festgestellt, dass fluoreszierende Materialien, nämlich Anti-Stokes-Kristalle im Material, insbesondere Kunststoffmaterial, als optische Marker dienen können, die bei einer entsprechenden Anregung durch Leuchten auf einfache und zuverlässige Weise anzeigen können, dass das untersuchte Material, bis hin zu kleinen Partikelgrößen, bestimmte Fremdstoffe enthält oder eine spezifische Zusammensetzung hat und somit auszusortieren ist. Leuchtet in einem entsprechenden Detektionsschritt das Material bzw. der einzelne Partikel nicht, können die detektierten Materialien der Aufbereitung gemäß Stand der Technik zugeführt werden.

Darüber hinaus wurde festgestellt, dass die als optische Marker eingesetzten fluoreszierenden Materialien, nämlich die Anti-Stokes-Kristalle eine solche chemische, thermische und UV-Stabilität aufweisen, dass sie über den gesamten Lebenszyklus des Materials ihre Funktion erfüllen können, selbst wenn das Material in mehreren Recycling-Zyklen prozessiert wird.

Auch führt der Zusatz von fluoreszierenden Materialien in das Kunststoffmaterial zu keinerlei Farbveränderung oder Metamerie, weder im Recycling-Schritt noch an den daraus hergestellten Produkten, wie beispielsweise PVC-Fensterrahmen, die insgesamt bezüglich ihrer Eigenschaften durch den Zusatz der fluoreszierenden Materialien in keiner Weise beeinträchtigt werden.

Hervorzuheben ist auch eine schnelle Detektierbarkeit des Materials in einem Aufbereitungsverfahren.

Durch die engbandige Anregung bietet die Erfindung insbesondere bei mehrstufigen Sortierprozessen Vorteile gegenüber dem Stand der Technik, wenn für die verschiedenen, zu trennenden Materialzusammensetzungen verschiedene Anti-Stokes-Kristalle eingesetzt werden, die auf unterschiedliche Anregungsenergien fluoreszierend bzw. mit einem Leuchten reagieren. Dann kann die Trennung in mehreren Stufen durchgeführt werden. Aussortiert werden immer nur die Partikel, die auf eine bestimmte Anregungswellenlänge durch Leuchten reagieren. Alle anderen Partikel werden zur nächsten Sortierstufe transportiert, bei der eine andere Anregungswellenlänge eingesetzt und damit andere Partikel aussortiert werden.

Im Ergebnis wird bei dem erfindungsgemäßen Verfahren nicht wie üblich über eine bestimmte Farbe der Fluoreszenz oder Farbe von zu sortierenden Partikeln sortiert, sondern durch die Anregungswellenlänge und das Leuchten bestimmter Partikel, während alle anderen Partikel dunkel bleiben bzw. nicht leuchten. Daher können zur Erkennung und Lokalisierung der Partikel immer dieselben, einheitlichen und einfachen Kameras eingesetzt werden.

Bei dem aus dem Stand der Technik bekannten Markierungen auf Basis von Farben muss die Kamera nicht nur ein Leuchten, sondern eine bestimmte Farbe erkennen. Bei dem aus dem Stand der Technik bekannten Markierungen auf Basis von UV-Pigmenten müssen diese zunächst breitbandig angeregt werden, worauf alle Pigmente leuchten und bei verschiedenen Wellenlängen leuchten. Die Kamera muss dann nicht nur ein Leuchten erkennen, sondern nach Wellenlängen bzw. Farbe differenzieren. Die Anforderungen für die Kamera sind anspruchsvoller. Die Kameras müssen bei jeder Sortierstation auf eine andere Wellenlänge eingestellt werden.

Weitere Vorteile und Merkmale des Kunststoffmaterials ergeben sich aus der folgenden detaillierten Beschreibung eines bevorzugten Ausführungsbeispiels und dessen Einsatz in einem Aufbereitungsverfahren.

Kunststoffmaterial in Form von PVC-Fensterrahmen wird in einen Recyclingbetrieb zusammen mit PVC-Material, das frei von vorzugsweise faser- oder teilchenartigen Fremdstoffen ist, angeliefert. Das gesamte Material wird zunächst grob zerkleinert, was beispielsweise mittels einer Hammermühle erfolgen kann. Eine bevorzugte Teilchengröße nach der Grobzerkleinerung beträgt etwa 0,2 bis 2,0 cm.

Vorzugsweise kann der Grobzerkleinerung ein Nassmahlschritt nachgeschaltet werden, um einen besseren Reinigungseffekt und damit eine bessere Erkennung in einem folgenden Detektionsschritt zu gewährleisten.

Nach der Zerkleinerung wird das Mahlgut mittels eines optischen Detektors, der die als Marker eingebrachten fluoreszierenden Materialien, nämlich Anti-Stokes-Kristalle, nach Anregung mit Energie geeigneter Wellenlänge durch ihr Leuchten erkennen kann, untersucht und die markierten und dadurch detektierten Teile ausgesondert. Anlagen zur Aussonderung/Aussortierung nicht gewünschter Kunststoffteile sind auf dem Fachgebiet gut bekannt und werden industriell bereits eingesetzt.

In dem Detektionsschritt erfolgt eine Anregung der fluoreszierenden Materialien, nämlich Anti-Stokes-Kristalle, durch eine Lichtquelle mit einer auf die zugesetzten Materialien abgestimmten Wellenlänge, bevorzugt mit Hilfe eines Lasers mit entsprechender Ablenkoptik.

Die Detektion der fluoreszierenden Materialien kann dann mittels eines Kamerasystems erfolgen, das bereits in üblichen Sortieranlagen vorhanden ist.

## Patentansprüche

1. Verfahren zum Sortieren einer Mischung von Materialien, wobei die Mischung zumindest ein Material umfasst, das Fremdstoffe enthält oder eine spezifische Zusammensetzung hat und ferner zumindest eine fluoreszierende Verbindung enthält, wobei das Verfahren die Schritte umfasst:
i) optional Grob- und/oder Feinzerkleinern der Materialien;
ii) Anregen zumindest einer fluoreszierenden Verbindung in dem Material, das Fremdstoffe enthält oder eine spezifische Zusammensetzung hat und ferner zumindest eine fluoreszierende Verbindung enthält;
iii) Detektieren des die angeregte fluoreszierende Verbindung enthaltenden Materials, das Fremdstoffe enthält oder eine spezifische Zusammensetzung hat und ferner zumindest eine fluoreszierende Verbindung enthält; und
iv) Aussortieren des detektierten Materials, das Fremdstoffe enthält oder eine spezifische Zusammensetzung hat und ferner zumindest eine fluoreszierende Verbindung enthält, von den anderen Materialien;
**dadurch gekennzeichnet, dass** die fluoreszierende Verbindung Anti-Stokes-Kristalle bzw. -Pigmente umfasst.

2. Verfahren nach Anspruch 1, wobei das Verfahren mehrstufig ausgeführt wird, wobei in jeder Stufe unterschiedliche Anregungsenergien eingesetzt werden, um jeweils unterschiedliche fluoreszierende Verbindungen anzuregen und die die jeweilige fluoreszierende Verbindung enthaltenden Materialien auszusortieren.

3. Verfahren nach Anspruch 1 oder 2, wobei das Material, das Fremdstoffe enthält oder eine spezifische Zusammensetzung hat und ferner zumindest eine fluoreszierende Verbindung enthält, ein Kunststoffmaterial ist.

4. Verfahren nach einem der vorangehenden Ansprüche, **dadurch gekennzeichnet, dass** die Fremdstoffe faser- oder teilchenartig sind.

5. Verfahren nach einem der vorangehenden Ansprüche, wobei die Fremdstoffe ausgewählt sind aus der Gruppe bestehend aus Glasfasern, Silica und Mischungen derselben.

6. Verfahren nach einem der vorangehenden Ansprüche, **dadurch gekennzeichnet, dass** die fluoreszierende Verbindung im wesentlichen homogen im Material eingemischt ist.

7. Verfahren nach einem der vorangehenden Ansprüche, **dadurch gekennzeichnet, dass** das Material, das Fremdstoffe enthält oder eine spezifische Zusammensetzung hat und ferner zumindest eine fluoreszierende Verbindung enthält, ausgewählt ist aus der Gruppe bestehend aus Polyvinylchlorid (PVC) und Vinylchlorid-Copolymeren.

8. Verfahren nach Anspruch 7, **dadurch gekennzeichnet, dass** das Material, das Fremdstoffe enthält oder eine spezifische Zusammensetzung hat und ferner zumindest eine fluoreszierende Verbindung enthält, PVC-Fensterrahmen, PVC-Profile, PVC-Produktionsabfälle und Mischungen derselben umfasst.

9. Verfahren nach einem der vorangehenden Ansprüche, **dadurch gekennzeichnet, dass** die fluoreszierende Verbindung in einer Konzentration von 10 - 200 ppm, bezogen auf das Gesamtgewicht des Materials, vorliegt.

10. Verfahren nach einem der vorangehenden Ansprüche, wobei Schritt i) optional Grob- und/oder Feinzerkleinern der Materialien auf eine Größe von 0,1-2,0 cm ist.

## Claims

1. Method for sorting a mixture of materials, wherein the mixture comprises at least one material, which contains foreign substances or has a specific composition and further comprises at least one fluorescent compound, the process comprising the steps of:
i) optionally coarsely and/or finely comminuting the materials;
ii) exciting at least one fluorescent compound in the material, which contains foreign substances or has a specific composition and further comprises at least one fluorescent compound;
iii) detecting the material containing the excited fluorescent compound , which contains foreign substances or has a specific composition and further comprises at least one fluorescent compound; and
iv) separating the detected material, which contains foreign substances or has a specific composition and further comprises at least one fluorescent compound, from the other materials;
**characterized in that** the fluorescent compound comprises Anti-Stokes-crystals or -pigments.

2. Method according to claim 1, the process being carried out in several stages, wherein different excitation energies are used in each stage in order to excite different fluorescent compounds each time and to screen out the materials containing the respective fluorescent compound.

3. Method according to claim 1 or 2, wherein the material, which contains foreign substances or has a specific composition and further comprises at least one fluorescent compound, is a plastic material.

4. Method according to any one of the above claims, **characterized in that** the foreign substances are fibrous or particulate.

5. Method according to any one of the above claims, wherein the foreign substances are selected from the group consisting of glass fibres, silica and mixtures thereof.

6. Method according to any one of the above claims, **characterized in that** the fluorescent compound is blended into the material substantially homogeneously.

7. Method according to any one of the above claims, **characterized in that** the material, which contains foreign substances or has a specific composition and further comprises at least one fluorescent compound, is selected from the group consisting of polyvinyl chloride (PVC) and vinyl chloride copolymers.

8. Method according to claim 7, **characterized in that** the material, which contains foreign substances or has a specific composition and further comprises at least one fluorescent compound, comprises PVC window frames, PVC profiles, PVC production waste and mixtures thereof.

9. Method according to any one of the above claims, **characterized in that** the fluorescent compound is present in a concentration of 10 - 200 ppm, based on the total weight of the material.

10. Method according to any one of the above claims, wherein step i) is optionally coarsely and/or finely comminuting the materials to a size of 0.1 - 2.0 cm.

## Revendications

1. Procédé permettant de trier un mélange de matières, **caractérisé en ce que** le mélange comprend au moins une matière contenant des substances étrangères ou bien étant d'une composition particulière et contenant par ailleurs au moins un composé fluorescent, le procédé comportant les étapes suivantes:
i) broyer de manière optionnelle les matières grossièrement et/ou finement;
ii) exciter au moins un composé fluorescent dans les matières, qui contient des substances étrangères ou bien qui est d'une composition particulière et qui contient par ailleurs au moins un composé fluorescent;
iii) détecter la matière contenant le composé fluorescent excité qui contient des substances étrangères ou bien qui est d'une composition particulière et qui contient, par ailleurs, au moins un composé fluorescent; et
iv) séparer, des autres matières, la matière détectée contenant des substances étrangères ou bien qui est d'une composition particulière et qui contient par ailleurs au moins un composé fluorescent;
**caractérisé en ce que** le composé fluorescent comprend des cristaux ou des pigments anti-Stokes.

2. Procédé selon la revendication 1, le procédé se déroulant en plusieurs étapes, **caractérisé en ce que** différentes énergies d'excitation sont employées au cours de chaque étape pour exciter chaque fois des composés fluorescents différents et pour trier les matières qui contiennent le composé fluorescent respectif.

3. Procédé selon la revendication 1 ou 2, **caractérisé en ce que** la matière qui contient des substances étrangères ou bien qui est d'une composition particulière et qui contient par ailleurs au moins un composé fluorescent, est une matière plastique.

4. Procédé selon l'une quelconque des revendications précédentes, **caractérisé en ce que** les substances étrangères sont fibreuses ou bien se présentent sous forme de particules.

5. Procédé selon l'une quelconque des revendications précédentes, **caractérisé en ce que** les substances étrangères sont sélectionnées dans le groupe qui comporte des fibres de verre, de la silice ou bien de mélanges de ces produits.

6. Procédé selon l'une quelconque des revendications précédentes, **caractérisé en ce que** le composé fluorescent est mélange dans la matière de façon essentiellement homogène.

7. Procédé selon l'une quelconque des revendications précédentes, **caractérisé en ce que** la matière qui contient des substances étrangères ou bien qui est d'une composition particulière et qui contient par ailleurs au moins un composé fluorescent, est sélectionnée dans le groupe qui comporte du chlorure de polyvinyle (PVC) et des copolymères de chlorure de polyvinyle.

8. Procédé selon la revendication 7, **caractérisé en ce que** la matière qui contient des substances étrangères ou bien qui est d'une composition particulière et qui contient par ailleurs au moins un composé fluorescent, comprend des châssis de fenêtre en PVC, des profilés en PVC, des déchets de production en PVC, ou bien des mélanges de ces produits.

9. Procédé selon l'une quelconque des revendications précédentes, **caractérisé en ce que** le composé fluorescent présent est d'une concentration de 10 - 200 ppm sur la base du poids total de la matière.

10. Procédé selon l'une quelconque des revendications précédentes, **caractérisé en ce que** l'étape i) consiste à broyer de manière optionnelle les matières grossièrement et/ou finement pour les réduire à une grosseur de 0,1 - 2,0 cm.
